# EUROPEAN PATENT APPLICATION

(11) **EP 4 620 890 A1**
(43) Date of publication of application: **24.09.2025**
(21) Application number: 25164712.9
(22) Date of filing: 19.03.2025
(51) Int. Cl.: B66C 21/04, B66D 1/12

(54) **CABLE DRAG SYSTEM WITH ELECTRIC DRIVE**

(30) Priority: 19.03.2024 GB 202403879
(71) Applicant: T-Mar Industries Ltd., Campbell River B.C. V9H1N6 (CA)
(72) Inventor: Biebach, Philip, Campbell River, V9H1N6 (CA)
(74) Representative: Münzer, Marc Eric

(57) **Abstract**

A cable drag system having a drive subsystem and a tailhold on opposing sides of terrain for hauling equipment or loads. The device may include a carriage 20 with load attachment, a mainline cable 18 connected to a mainline winch 14 and to the carriage to pull the carriage towards the winch. A haulback cable 16 connected to a haulback winch 12 and to the carriage pulls the carriage away from the winch. A drive subsystem may include: a first electric motor connected to the mainline winch; a second electric motor connected to the haulback winch; a DC bus connected to an electrical power source and an electric power storage; an electric drive controller 42 operatively coupled to the DC bus and to the first and second electric motors, the drive controller arranged to provide power to or regenerate power from the electric motors.

A system for hauling loads comprising:
a winch subsystem;
a pulley 15 anchored remote from the winch subsystem;
a carriage 20 with load attachment;
the winch subsystem comprising:
a mainline cable 18 connected to a mainline drum 34 and connected to the carriage to pull the carriage towards the winch subsystem;
a haulback cable 16 connected to a haulback drum 38 and connected to the carriage via the pulley to pull the carriage towards the pulley,
and;
a drive subsystem 30 comprising:
a first electric motor 14 connected to the mainline drum;
a second electric motor 12 connected to the haulback drum;
an electrical power source 48;
one or more electric drive controllers 42 operatively coupled to the first and second electric motors, wherein the one or more electric drive controllers are arranged to provide power to said electric motors and regenerate power from said electric motors.

## Description

### FIELD OF THE INVENTION

The invention relates generally to cable drag systems, in particular, electric drive systems for hauling loads across terrain.

### BACKGROUND OF THE INVENTION

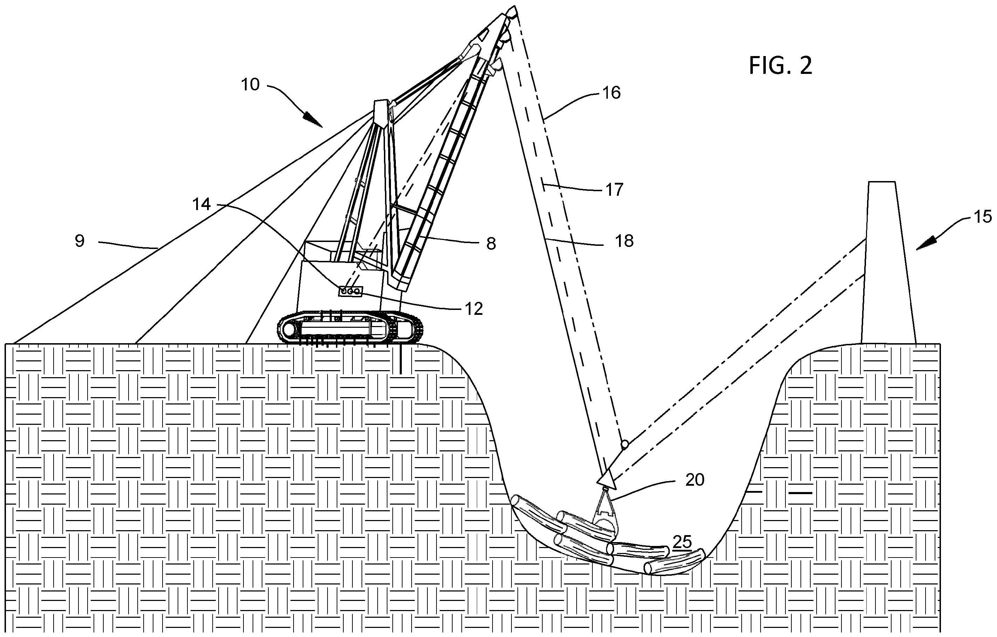

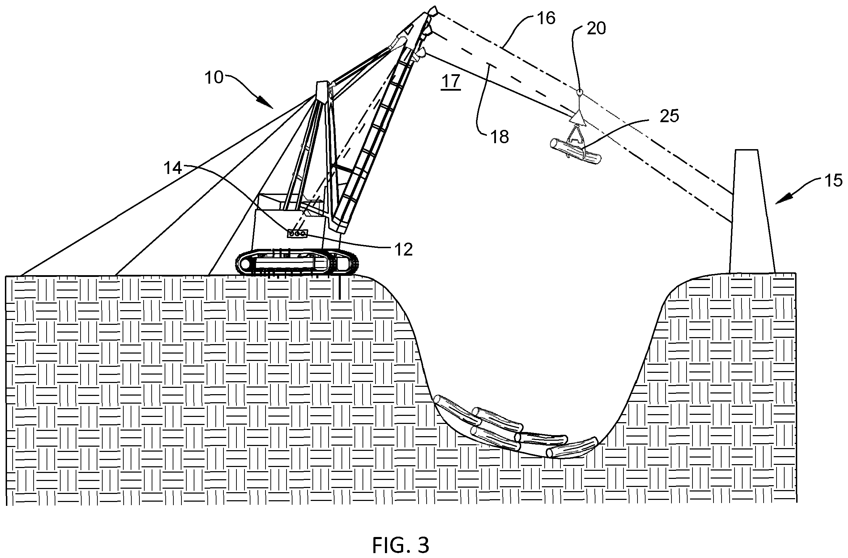

Cable drag systems, also known as cable logging or skyline logging, are used in the logging industry to transport logs from a stump area to a central collection point. These systems involve the use of cables, which can be rigged in several configurations, to pull or drag the logs. A typical yarder environment and operation is depicted in Figures 2 and 3.

A yarder is logging equipment that generally consists of an engine, drums, and a tower boom. Swing yarders are designed for steep slope logging. They can swing the boom, which can retrieve felled logs from a wider path and require fewer moves to harvest logs from an area. The Log Champ 550 & 650 Yarders are examples of swing yarders. The Log Champ 550 has a winch line pull of 70,000 Ibs and a range of 1500 feet, while the Log Champ 650 has a winch line pull of 95,000 lbs and a range of 1800 feet.

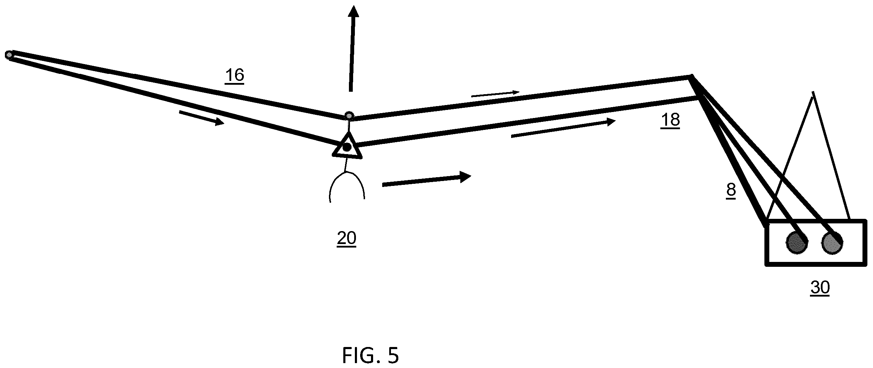

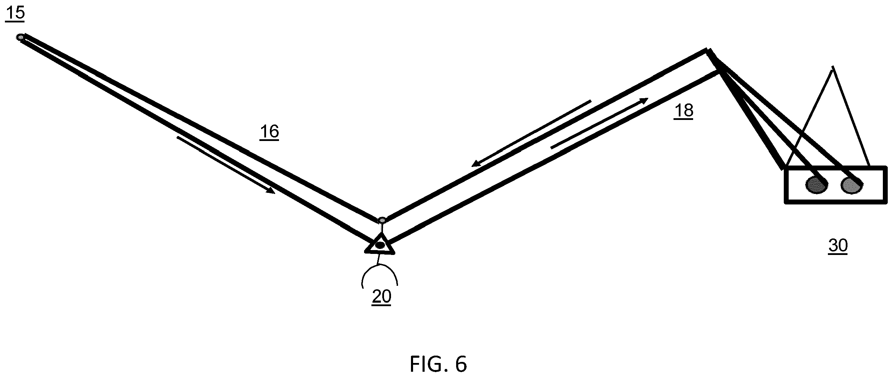

The heart of the system is the yarder machine. It is positioned at strategic locations on the slope to facilitate timber extraction. The yarder typically consists of the following components:
Main Winch: The primary winch responsible for hauling logs from the forest floor to the landing area.
Boom: An adjustable arm or boom that supports the elevated cables above the ground and allows precise movement and forwarding of logs. The machine can swing the boom to position logs accurately.
Carriage: The carriage travels along the elevated cables, carrying the logs.
Guy Lines: Stabilizing cables anchored to trees or other fixed points. They prevent the yarder from tipping over during operation.
Control Cabin: The operator controls the yarder from a cabin situated on the machine.
Engine and Hydraulic System: Provides power for winching and moving the yarder along the terrain.
Mainline Cable: A strong steel cable that connects the carriage to advance the carriage, bearing logs, toward the yarder. It also serves to close the grapple (tongs for picking up logs when advanced in relation to the slack-puller cable
Slack-puller Cable: A strong steel cable that connects to the carriage and assists the mainline cable in advancing the carriage and logs toward the yarder. It also serves to open the grapple when advanced in relation to the mainline cable
Haulback Cable: A strong steel cable that spans to the opposite side of the harvesting area, and returns to the opposite side of the carriage around a sheave block. It serves to haul the carriage away from the yarder to retrieve logs. Adding tension to the cable, in relation to the mainline and slackline cables also elevates the carriage above the ground. This can be done while the carriage is stationary or in motion.
Drive unit: The cables are wrapped around drums of winches that are mechanically interconnected. Winding cable onto the mainline drum, while playing out cable from the haulback drum retums the carriage from the field transversely (See Fig 6), while reversing their directions sends the carriage out to the anchor. The rigging's deflection and line tension can be increased and decreased by winding both the haulback and main line in the same direction to raise and lower the grapple (see Fig 5).

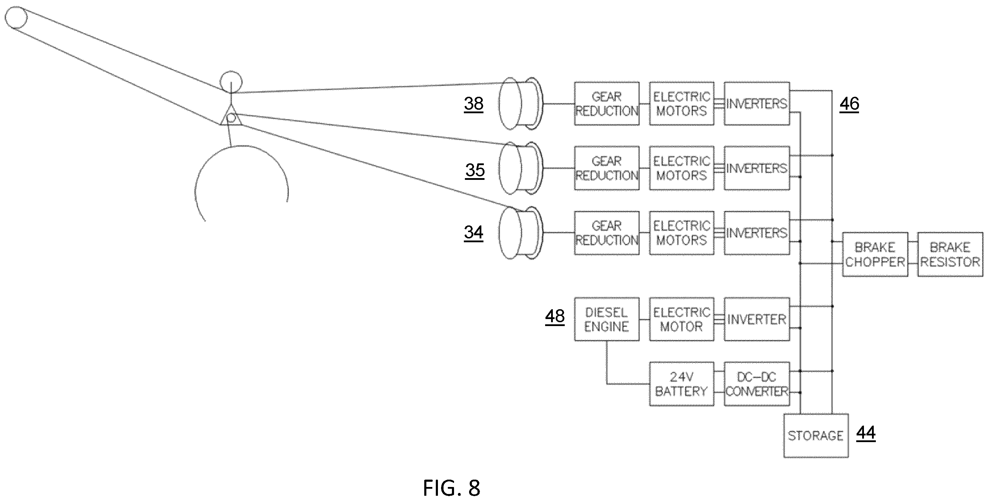

The drives for the mainline **34** and haulback winches **38** are mechanically interconnected (see Fig 8) to recover energy in a process referred to as mechanical regeneration or 'regen.' This helps create lift without dissipating energy as braking heat. Since the effective diameter of the drums varies as cable is spooled or paid out, it is necessary to slip the regenerative clutch to accommodate this differential. This differential slip causes significant heat/wear and tear and limitations on the useful yarding distances that are possible with mechanically interlocked machines.

Since a mechanically interlocked machine relies on direct connections between drums, several clutches and brakes are needed to control the drums independently, or in an interlocked fashion. On some older machines, the grapple can only be closed/opened when the grapple is being moved. Due to the mechanical link between drums there is always limitations between drums that limit the working modes, operable distances and slow down the overall cycle time.

### SUMMARY OF THE INVENTION

The inventors have appreciated that the current diesel drives of cable hauling systems do not normally operate at peak efficiency for a diesel engine due to the constantly changing loads and speeds. There is a cost saving and environmental impact reduction to be made by improving the drive system.

To address the shortcomings of the current machinery, a new machine, system and method are provided that has these advantages and solves certain problems mentioned above.

In one general aspect, a hauling system may include a winch subsystem, a pulley anchored located remote from the winch subsystem, a carriage with load attachment. System may include the winch subsystem having: a mainline cable connected to a mainline drum and connected to the carriage to pull the carriage towards the winch subsystem; a haulback cable connected to a haulback drum and connected to the carriage via the pulley to pull the carriage towards the pulley. System may also include a drive subsystem having: a first electric motor connected to the mainline drum; a second electric motor connected to the haulback drum; an electrical power source; one or more electric drive controllers operatively coupled to the first and second electric motors, where the one or more electric drive controllers are arranged to provide power to said electric motors and regenerate power from said electric motors.

Implementations may include one or more of the following features. System may include electric power storage coupled to the drive subsystem to absorb the regenerated power, preferably where the electric power storage is a supercapacitor. System may include an operator input device coupled to the one or more electric drive controllers and arranged to a) simultaneously drive the first and second motors or b) simultaneously drive one of the first and second motors, while regenerating power from the other of the first and second motors, preferably where the operator input device is a joystick having a first axis for indicating movement of the carriage up/down and a second axis for indicating movement towards/away from the winch subsystem. System may include a DC bus connected to the electrical power source, to the one or more electric drive controllers, and to first and second electric motors. System where the pulley is a spar platform with guys for fixing the pulley and withstanding tension in said cables. System may include a slack puller winch connected to a slack puller line that is connected to the carriage and arranged to open or close the carriage. System where the electrical power source is a generator, preferably a diesel generator, preferably may include batteries coupled to the generator to smooth out power demanded by the drive subsystem. System may include a chopper and resistor to waste excess regenerated power. System where the system is arranged as a yarder vehicle containing the winch subsystem and drive subsystem and the load attachment is a grapple for logs. System where the system is arranged as a cable way crane application for hauling equipment or materials across a landscape. System where the load attachment is a scraper for moving or capturing minerals, earth or waste across a terrain.

One aspect of the invention provides a method having: in response to an input signal for a desired trajectory of the carriage, using the one or more electric drive controller to independently control the first and second electric motors, which motors play in or play out said cables to move the carriage along the desired trajectory. The method may include regenerating electric power from one of the first and second electric motors to an electric power storage, while driving the other of the first and second electric motors. The method where a joystick provides said input signal and the desired trajectory is of the carriage moving up/down and towards/away from the winch subsystem. The method may include using the electric drive controller to convert the input signals into relative driving speeds of the first and second motors to achieve the desired trajectory. The method may include locating the winch subsystem on one side of a terrain and anchoring the pulley on an opposing side of the terrain with the loads to be hauled therebetween, preferably may include moving the winch subsystem using a vehicle along said one side of the terrain. The method may include driving a third motor coupled to a slackpuller drum to play in or play out a slackpuller cable connected to the carriage to open or close the carriage. The method may include receiving sensor signals at the electric drive controller to optimize movement of the carriage for speed, tension in the cables and smoothness of movement. Implementations of the described techniques may include hardware, a method or process, or a computer tangible medium.

### BRIEF DESCRIPTION OF THE DRAWINGS

Various objects, features and advantages of the invention will be apparent from the following description of embodiments of the invention, as illustrated in the accompanying drawings. The drawings are not necessarily to scale, emphasis instead being placed upon illustrating the principles of various embodiments of the invention.
FIG 1. is a systems view of a yarder and cables.
FIG. 2 is an illustration of a yarder in operation on a hillside.
FIG. 3 is an illustration of a yarder in operation on a hillside.
FIG. 4 is an illustration of operating the yarder in transverse directions.
FIG. 5 is an illustration of a yarder pulling in line to raise the carriage.
FIG. 6 is an illustration of a yarder paying line out to drop the carriage.
FIG. 7 is an end view of a prior art winch drives that are mechanically connected.
FIG. 8 is a block diagram of a hybrid electric drive subsystem.
FIG. 9 is a table of control states converting inputs signals to motor signals.
FIG. 10 is an illustration of a joystick with dual axis input and control diagram.

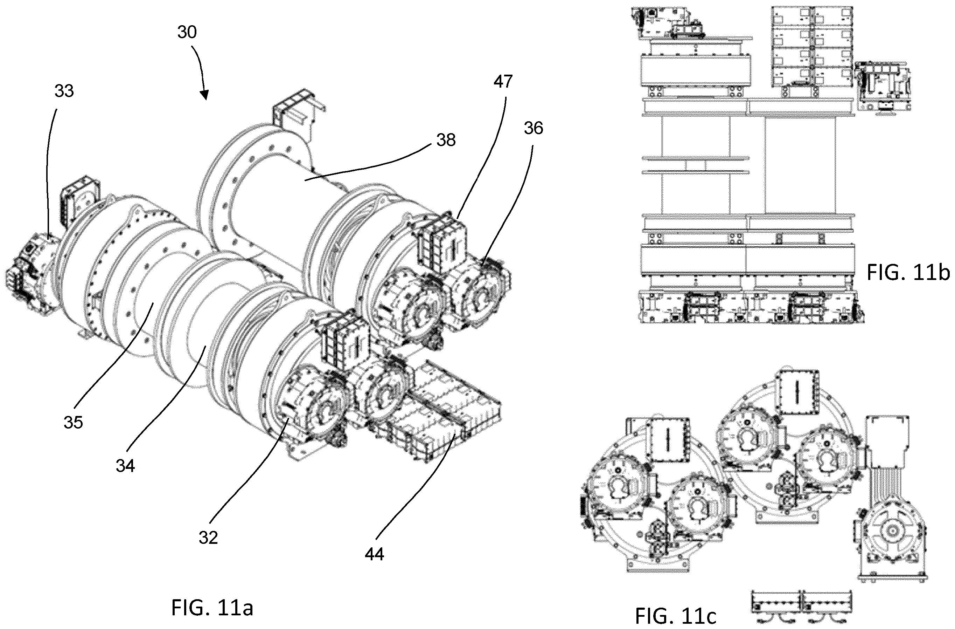

FIG. 11a is a perspective view of the drive system showing drums, motors, gears, and inverters.
FIG. 11b is a top view of the drive system of FIG. 11a.
FIG. 11c is an end view of the drive system of FIG. 11a.
FIG. 12a is a perspective view of a compact electric drive subsystem having plural motors.
FIG. 12b is a top view of a compact electric drive subsystem of FIG. 12a.

### DETAILED DESCRIPTION OF THE INVENTION

With reference to the accompanying figures, a cable drag system and methods of operation are disclosed for moving loads in two dimensions over a course. The present system employs a hybrid electric drive system to make moving the load easier and more energy efficient. The hybrid electric drive system has three electric drive units, each one having a winch connecting one of the cables attached to the load. In use, one or more electric drive units are pulling in while the other electric drive unit is playing out. Thus similar to other cable drag systems, one drive is working while the other is braking to create lift. However in the present system the braking electric drive unit is undergoing regenerative braking, which returns power to the working drive unit or energy storage unit. This makes the system far more efficient and versatile than previous systems. The yarder is also easier to operate when integrated with modern electrical controllers, instead of relying on clutches and engine throttles to carefully match pull-in and play-out speeds and loads.

The novel hybrid electric drive in a cable drag system **1** has many applications. One such application is a yarder for moving logs **25** over steep terrain, as shown in FIGs 2 and 3. Yarder **10** is shown atop a ridge with tracks for moving the yarder, guy wires 9 for securing the yarder, and boom **8** that supports and directs the cables to the load. On the other side of the valley or hill there is a tail spar with tail block **15** with pulley that passively receives and returns the cables to and from the yarder and carriage. The carriage **20** has attachment means to secure the load to be hauled.

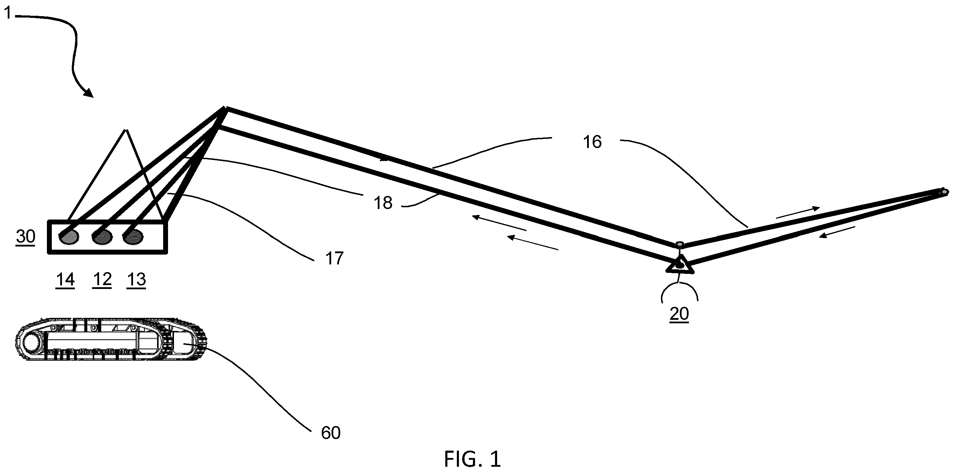

FIG 1 illustrates a simplified cable drag system **1** and its operation. A drive subsystem **30** with drums, electric drives and cables combine to control the lateral and vertical movement of the load over the terrain. A mainline **18** wraps around a first drum with drive **14** to pull the carriage toward the yarder. A haul back cable **16** wraps around a second drum with drive **12** to pull the carriage away from the yarder. These drums operate together to move the load, one drum pulling in, while the other plays out. Together they provide a "running skyline" that replaces a conventional skyline that would normally run from yarder to secure base. Both the mainline and haul back connect to the carriage **20.**

The third drum/drive **13** shown in FIG 1 is for the slack puller, a cable that connects to an actuator on the carriage, such as at the grapple to open or close the jaws around the load. The slackpuller cable normally moves at the same rate as the mainline during log movement, then moves relative to the mainline to close or release the jaws.

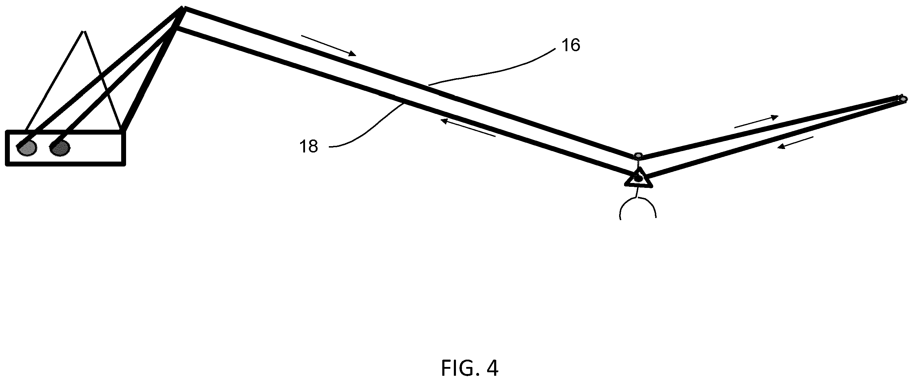

When the linear speeds of the mainline and haul back are the same, the carriage will move towards (or away from) the yarder at a constant inclination (see Fig. 4). To move the carriage up, the mainline has to pull in faster than the haul back is playing out (see Fig. 5). To move the carriage down, the mainline has to pull in slower than the haul back is playing out (see Fig 6).

Regular motor controllers designed for traction applications do not work well in dynamic winch applications. Unlike traction applications where acceleration and braking are highly damped by the mass of the vehicle attached to the motors, in cable drag systems, the drums go from pulling to slack (or slack to pulling) with an instantaneous jump in applied load that causes instability for motor controllers designed for traction applications.

The present system regulates the motors by using a combination of speed control and torque limits, rather than torque control with speed limits as vehicles commonly use, to coordinate the independent drums depending upon the yarding phase. A PID control loop controls these dynamically.

The drums are primarily controlled with a speed control governor with differential bias applied to precisely control the carriage movement (in, out, up, down) as well as open/close the grapple. Advantageously there are no limitations on mixing of these functions (unlike a mechanical regen machine). A torque limit for each motor may be added to limit max pull and reduce wear on the components

As mentioned above, the drums' diameter varies depending upon how much cable is on it. This changes the operating characteristics, so the present drive controller **42** is arranged to have consistent operation over the full range of cable on each drum. The control system may have a control trim input that allows the operator to adjust the relative drum speed bias applied between the haulback and main line to prevent line droop/raising. This trim bias applied is a function of drum revolutions.

In the alternative, a line counter or drum encoder may be added to each drum to track the cable or drum rotations, which is provided to the control system to automatically adjust each drum speed and torque demands to account for the changing drum diameters.

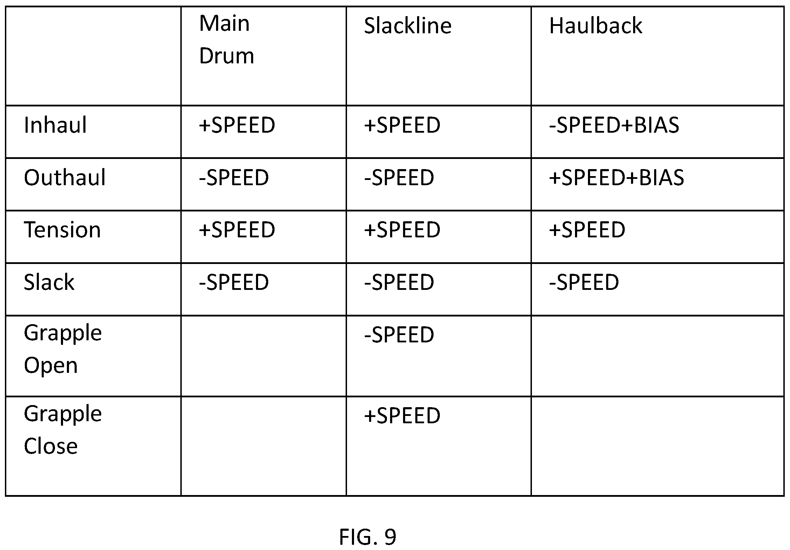

The table in Fig. 9 summarizes the control states for the control system. For a given input signal from an operator (column 1), the control system converts this to a combination of drive signals to the winch as shown.

The drum bias factor is used to allow the operator to trim out the effect of the changing effective drum diameter as line spools onto the drums so that the grapple does not tend to drift up or down as it is coming in/out. This is accomplished by running the haulback at a slightly faster or slower speed as compared with the main & slack pull drum. The drum bias factor is adjustable by the operator using controls in the cab.

The differential bias factor can be used to manage cable tension in the haulback and mainline drums in order to keep the grapple or other lifting device open/closed regardless of the current effective drum diameter (diameter changes due to cable wrap buildup) and prevent excessive slack from forming that can cause the lines to become tangled. At the most basic level this differential bias factor would account for different amounts of line on the main and slack pull drums so that the grapple does not tend to drift open or closed. A more advanced implementation allows for equalization of cable tensions between the mainline and haulback, so that the slack puller always shares a percentage of the tension and is not allowed to go fully slack. For example, the closing line drum could be commanded to a slightly higher speed than the slack puller (differential bias), but have the torque limited to a relatively low percentage of the main line torque.

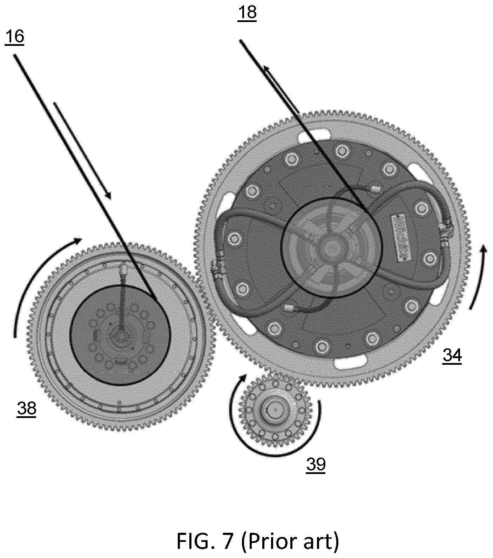

In prior systems, a large diesel engine would mechanically drive one of the drums to move the load, while the other drum would be playing out under the tension in the connected cable system. The engine is connected to each of the drums by gearbox and a clutch depending on which drum is being powered at a given time. To avoid run-away unspooling, that other drum must be constantly braking or interlocked to the powered drum. FIG. 7 shows the simplified interconnection between the two drums **34,38.** To account for the slowly changing radius of the drums, as they spool with cable, the operator will need to allow one of the drums to slip using its clutch.

Conversely, in the present system, one drum's motor receives electric power, while recouping the electrical energy from braking the other drum to create line tension. An electric power storage unit **44** may be placed in the loop to absorb excess regenerated power or supply peak demand. Power storage helps regulate the DC bus voltage and prevents transient voltage spikes that could damage components.

### Electrical Supply System

FIG 8 is a block diagram of components in the electrical supply system. This system as shown includes a generator **48,** DC-AC inverter (motor controller) **47,** power storage **44,** and DC bus **46.** The electrical drive system is electrically interlocked by a DC bus, typically sized to operate at 450-800 volts and provide up to 2500 amps surge power. The motors are preferably AC permanent magnet motors that operate from 600- 900 volts, and generate 2000-3000 Nm torque, 400-500 kilowatts peak. To control each motor's power and regeneration, an individual inverter is preferably employed per motor. The inverter sits between the DC bus and AC motor to provide alternating current to the stator windings of the induction motor from the DC bus.

Power storage **44** may include conventional batteries, such as lithium ion or lead acid batteries, but in preferred systems supercapacitors are used. In one example, a bank of sixteen (51 Volt, 188 Farad) capacitors is wired in series. Although supercapacitors are expensive, they can accept charge and supply energy at the rates experienced by the machine. They also withstand more cycles than batteries. Supercapacitors can discharge down to zero volts without any damage, which allows for a safe "fully de-energized" condition for safe maintenance of the machine.

The energy storage may also be coupled to the generator to even out lower frequency fluctuations in power demand, such that the engine can operate at its ideal rpm and load. This energy storage may comprise the more conventional lead acid battery type, which reduces cost and offers higher capacity.

Thus in operation, the generator's engine can run at an ideal, steady rate to provide a steady DC current to the DC storage, which absorbs excess power when the system is not working hard (or releases power when the system is working hard). Specifically, the supercapacitor absorbs and releases power as needed for short bursts, due to changes in speeds, directions, and bumps on the loads. While regenerative braking is known in electric vehicles, one does not simultaneously drive one set of wheels, while braking on another as the primary working state. Thus, known EV regenerative systems do not involve the dynamic interplay between two or more drives in opposing states, i.e. driving while regenerating. Thus coordinating the winches is a non-trivial task, solved by the present system. The haulback winch is configured to oppose the main winch (together with the slackline winch, where appropriate). Pulling in one cable acts against regenerative braking to generate tension/lift in the cables and recovers energy.

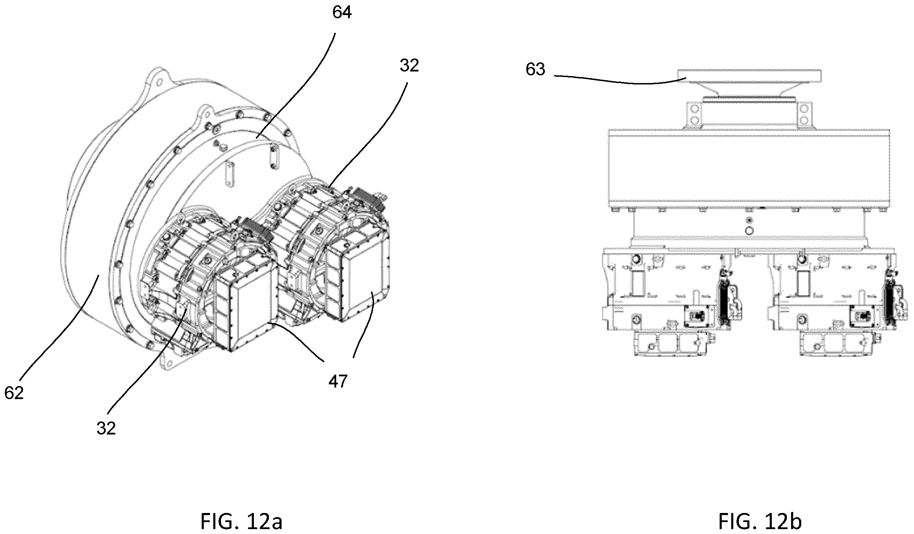

The drums of the present system are mechanically independent of each other to allow for full control over the speed/direction/torque of each drum. Plural motors can be used to drive each drum. A gear reduction is preferably used between the electric motors and the winches to provide the correct speed/torque range needed for the application. As shown in Figure 12a, gear reduction may be achieved by a helical gear assembly **64** then a planetary gear assembly **62** and may take more than one motor **32** at the input. For the present machine a motor input speed of 0-6000 rpm and torque of 2000-300Nm is run through a 40:1 reduction to approximately match the performance of traditional machines. Alternative reductions could also be used including belt drives.

The supercapacitors are preferably pre-charged before machine operation if the voltage drops below the minimum operating voltage. This may be due to entering a service safe mode or due to self-discharge over a period of non-use. Preferably, the electrical control system includes a DC-DC converter with constant current mode to limit current to a safe level while maximizing charge rate.

The electrical control system monitors the pre-charge process and stops the charge if there are any faults, e.g. overtemperature, over voltage, or loss of isolation. Once the pre-charge system has raised capacitor charge voltage to the generator's minimum operating voltage, the control system enables the main contactor to allow the generator to begin bulk charging of the capacitors. The generator's target charge voltage is set at a value below the maximum operating voltage (max operating voltage is determined by the lowest rated component installed on the DC bus) to allow for a buffer to regenerate power during regen braking.

As shown in Figure 8, a brake chopper and resistor may be used to burn off excess power generated during regenerative braking to prevent over voltage at the energy storage **44.** The brake chopper monitors DC bus voltage and responds by connecting the brake resistor across the DC bus, as needed to maintain the voltage within safe limits. To bring the system into a safe "deenergized" state for servicing, the control system requests the brake chopper to discharge the supercapacitors.

### Control system

A computer control system is used to convert the operator's input to speed and torque demands for the electric motors and manage the relative speed of each drum for ease of operation and to maximize regenerative efficiency.

The main drum speed/direction is controlled by the operator using manual inputs, such as joysticks. The operation scheme may be for each joystick to control a respective drum (i.e. mainline, haulback and slackpuller drums). The control system receives the operator's bidirectional inputs, as digital or analogue signals, and turns on the appropriate motor in the appropriate direction. In one direction (driving / pulling in), the control system outputs a control signal to the inverter/motor driver proportional to the speed demanded. In the reverse direction (braking / playing out), the control system outputs a control signal to the regenerative part proportional to the speed demanded.

Compared to tower cranes that can operate a lift winch independently from the transverse winch, cable drag systems typically require controlling both winches simultaneously just to move in a straight line. Thus in some embodiments, the operator's inputs (e.g. joystick) are arranged to request pure transverse movement for one input axis and pure vertical movement (lift, drop) in another input axis. The control system is arranged to map these operator requests to drive the appropriate proportion of main winch/haulback winch speeds.

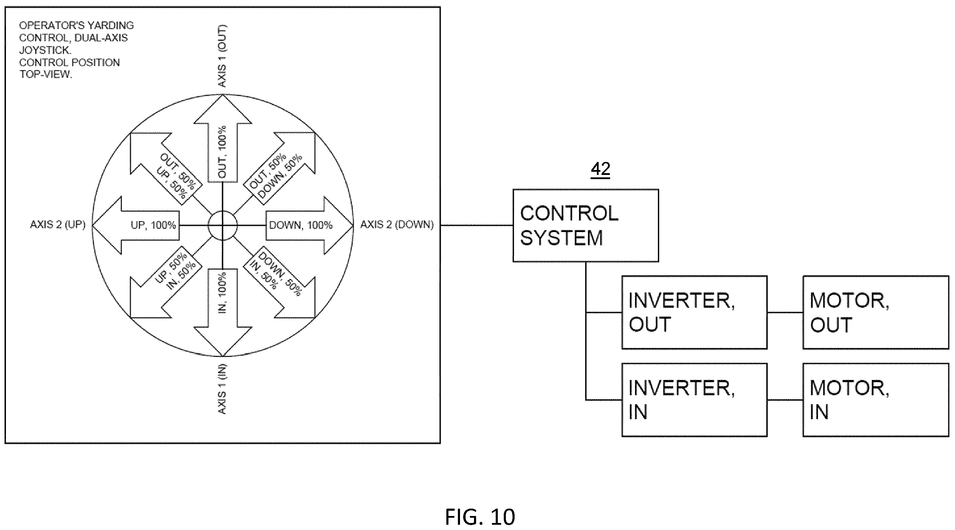

As shown in FIG. 10 a single joystick can be used to control all the motors smoothly, simultaneously and intuitively. The first axis (vertical axis shown) provides operator input to directly controls movement of the load out and in, i.e. horizontal movement. The second axis (lateral or side-to-side axis as shown) provides operator input to control movement of the load up and down, i.e. vertical movement. This dual-axis electric joystick may be mounted to the operator's seat in the machine cab, on the operator's right. All winch yarding functions may be controlled via the single joystick - lines in (inhaul), lines out (outhaul), lines up, lines down, mechanical grapple operation (button operated), and all subsequent line tensioning. With respect to position of the operator, the joystick forward-backward axis corresponds to lines out and lines in respectively; the joystick side-to-side axis corresponds to left up and right down. Joystick movement in any direction between axes corresponds to a combination of motor speed, e.g. 45 deg. forward and to the left is 50% out and 50% down. The controller thus provides a conversion from desired carriage movement at the joystick to relative drive signals, i.e. each motor's; direction and speed. The joystick middle (neutral) position leaves the load stopped - the winch will hold at whatever position it stops at, and the motors will work together to maintain the position, e.g. line tension will hold. The joystick output signal is linear, in proportion to joystick throw, however this can be adjusted via the control system settings. The single joystick communicates with the winch motor inverters via the motor control system - the inverters communicate with the motors. The use of a single, dual-axis electric joystick for complete yarding control is an ergonomic and functional improvement over historical controls.

The single joystick replaces prior mechanical winch controls that consisted of a joystick for engine throttle control (single axis) and positioned to the operator's left, a lever control (single axis, air or electric) for yarding control and positioned to the operator's right, and two or more foot pedals (air) positioned at the operator's feet (for on-off band brakes). With historical yarding control systems, pushing the joystick forward to a specific point (e.g. indicated by a forward detent) starts the lines pulling out, and pushing the joystick beyond the specific point tensions the lines to produce lift. Pulling the joystick rearward to a specific point (e.g. rearward detent) starts the lines pulling in, and pulling the joystick beyond the specific point tensions the lines to produce lift. Prior yarding control levers have a significant throw, so operating the winch with quick in and out movement requires significant operator hand/arm movement.

In some embodiments, positional encoders, linear/rotational speed sensors, torque sensors, or overload sensors within the drive subsystem, coupled to the motor, gears or drums may be used as inputs to the drive controller to enable both open loop and closed loop control optimization. For example, cable break detection is possible by the controller sensing a sudden drop in cable tension / drum torque, which results in the controller removing the drive signals, braking the drums, and/or sounding alarms. Closed loop feedback algorithms such as proportional, integral, differential (PID) are used to smoothly drive the drum and hence the load in order to prevent bouncing and slipping. Advantageously, the present electric drive system allows greater operator control and smoother system operation compared to engines with mechanical drives.

Open loop optimizations are also possible by estimating each cable's linear speed from the measurable drum speed and estimate of the varying diameter of the laden drum. The ratio of haulback:mainline drum diameters at a given time lead to calculation of the bias value shown in the table of Figure 10.

Thus the operator needs only indicate a desired trajectory with a single throw of the joystick, which the controller converts to nominal haulback and mainline drive speeds ± a bias based on the estimated current drum diameters.

The control system may employ haptic feedback or force feedback to the joystick inputs based on the above feedback sensors, so that the operator can feel the strain, vibration, and loading experienced by the cable system. This will enable experienced operators to detect problems. Joysticks may have motors inside them that vibrate or resist the operator's force to simulate what the mechanical system is experiencing.

Another advantage of using digital inputs (rather than mechanical), feedback sensors, and digital controls driving multiple motors simultaneously is that additional operating modes may be automated or optimized. For example, the control system can be programmed such that the slack puller drum speed is set to match the main drum with a small differential speed applied to ensure that the grapple remains closed on inhaul and opens on outhaul without excessive slack. Alternatively, the haulback drum may be set to match the main drive speed with a differential applied to raise or lower the load smoothly at a given rate. The control system may also set torque limits, measured by force or torque transducers, to allow for the lines to slip under excessive load. The control system may also monitor energy storage and other machine functions to respond to faults, determine unsafe operations, and manage energy level of the storage.

### Fields of Use

For remote applications, such as a forest or a mining operation, electrical power would typically be provided by some internal combustion engine, arranged as a generator. Although the overall system does consume fuel and produce emissions, these can be minimized by operating the generator at its peak parameters.

In certain applications, electrical power may be more readily available, in which case the regenerative drive system still provides efficiencies in electrical power consumption.

At a high-level concept, the cable system is suited to moving loads horizontally across long distances, as a cable way crane. Moderate movement in the vertical direction enables situations, where following a contour or picking-up/dropping-off the loads to the ground is important. Having a movable tail anchor and vehicle for the winch system is advantageous in moving these loads to/from various locations in the environment. The electrical drive and control subsystem makes it ideal for situations where noise, emissions, or precise movement are important. The hybrid aspects enable applications where fuel is more readily available than electricity but the efficiencies from regeneration and optimized power generators are needed. Several applications of this technology are contemplated, as discussed below.

As mentioned above, yarding is the process of moving felled logs within a logged landscape from the felling location to a location for removal. The landscape of deep valleys makes the present system particularly suitable, with the long horizontal distance and moderate vertical distance to pick up logs. Electrical sources are unavailable, and fuel is expensive to bring in, so power efficiency is important. The slack puller may be used to activate the carriage jaws. The tail and winch locations would be movable to access the whole valley.

Other applications of the present system within logging may include hauling logs within the storage yard of a sawmill. For example, the system may move logs across long horizontal distances from one pile to another into areas for processing. The vertical movement allows the carriage to pick and drop from piles or move over piles.

The present system may be used in mining, whether to move mining carts along a mine shaft or moving a scraper in an open pit mine. The scraper may be moved great distances horizontally across the pit removing layers of earth or minerals, and the scraper vertical location may be adjusted to follow the contours of the pit's surface. The slack puller may be used to open-close the scraper opening. The tail and winch locations would be movable to access the whole pit. The scraper has a horizontal blade attached to a trailer, called a bowl. The blade is dropped into the soil and scrapes material into the bowl as the scraper moves forward. The scraper is connected to the winch pulls the rock to the tipping point after a blast. Similarly the present system may be used in agriculture to move soil, plant crops or harvest them, especially in hilly terrain.

The present system may be used in waste disposal and waste management. Waste bins may be moved distances horizontally across the dumping field (aka tip) with the vertical location adjusted to follow the contours of the tip or to pick-up /drop-off waste. The slack puller may be used to open-close the waste bins' jaws or opening. The tail and winch locations would be movable to access the whole area.

The present system may be construction, notably on hillside and bridges spanning a valley or body of water. The load could be equipment or materials that need to be transported long horizontal distances or held in place at some precise location with simple controls. The slack puller may be used to actuate the equipment at a desired location.

Terms such as "traverse", "vertical," "distal," "proximate," "up," "down", are used herein for simplicity in describing relative positioning of elements of the cable system, as depicted in the drawings or with reference to its normal operation and location. Although the present invention has been described and illustrated with respect to preferred embodiments and preferred uses thereof, it is not to be so limited since modifications and changes can be made therein which are within the full, intended scope of the invention as understood by those skilled in the art.

## Claims

1. A system for hauling loads comprising:
a winch subsystem;
a pulley anchored remote from the winch subsystem;
a carriage with load attachment;
the winch subsystem comprising:
a mainline cable connected to a mainline drum and connected to the carriage to pull the carriage towards the winch subsystem;
a haulback cable connected to a haulback drum and connected to the
carriage via the pulley to pull the carriage towards the pulley,
and;
a drive subsystem comprising:
a first electric motor connected to the mainline drum;
a second electric motor connected to the haulback drum;
an electrical power source;
one or more electric drive controllers operatively coupled to the first and second electric motors, wherein the one or more electric drive controllers are arranged to provide power to said electric motors and
regenerate power from said electric motors.

2. The system of claim 1, further comprising electric power storage coupled to the drive subsystem to absorb the regenerated power, preferably wherein the electric power storage is a supercapacitor.

3. The system of claim 1, further comprising an operator input device coupled to the one or more electric drive controllers and arranged to a) simultaneously drive the first and second motors or b) simultaneously drive one of the first and second motors, while regenerating power from the other of the first and second motors, preferably wherein the operator input device is a joystick having a first axis for indicating movement of the carriage up/down and a second axis for indicating movement towards/away from the winch subsystem.

4. The system of claim 1, further comprising a DC bus connected to the electrical power source, to the one or more electric drive controllers, and to first and second electric motors.

5. The system of claim 1, wherein the electrical power source is a generator, preferably a diesel generator, preferably further comprising batteries coupled to the generator to smooth out power demanded by the drive subsystem.

6. The system of claim 1, further comprising a chopper and resistor to waste excess regenerated power.

7. The system of claim 1, wherein the system is arranged as a yarder vehicle containing the winch subsystem and drive subsystem and the load attachment is a grapple for logs.

8. The system of claim 1, wherein the system is arranged as a cable way crane application for hauling equipment or materials across a landscape.

9. The system of claim 1, wherein the load attachment is a scraper for moving or capturing minerals, earth or waste across a terrain.

10. A method of operating the system of claim 1, the method comprising:
receiving an input signal for a desired trajectory of the carriage;
using the one or more electric drive controllers to independently control the first and second electric motors, which motors play in or play out said cables to move the carriage along the desired trajectory.

11. The method of claim 10, further comprising regenerating electric power from one of the first and second electric motors to an electric power storage, while driving the other of the first and second electric motors.

12. The method of claim 10, wherein a joystick provides said input signal and the desired trajectory is of the carriage moving up/down and towards/away from the winch subsystem.

13. The method of claim 10, further comprising using the electric drive controller to convert the input signals into relative driving speeds of the first and second motors to achieve the desired trajectory.

14. The method of claim 10, further comprising locating the winch subsystem on one side of a terrain and anchoring the pulley on an opposing side of the terrain with the loads to be hauled therebetween, preferably further comprising moving the winch subsystem using a vehicle along said one side of the terrain.

15. The method of claim 10, further comprising receiving sensor signals at the electric drive controller to optimize movement of the carriage for speed, tension in the cables and smoothness of movement.
